# EUROPEAN PATENT APPLICATION

(11) **EP 1 549 033 A1**
(43) Date of publication of application: **29.06.2005**
(21) Application number: 03793826.3
(22) Date of filing: 03.09.2003
(51) Int. Cl.: H04M 3/487

(54) **DIALLING ERROR WARNING SYSTEM AND METHOD**

(30) Priority: 04.09.2002 ES 200202021
(71) Applicant: Vodafone Group PLC, Newbury Berkshire RG14 2FN (GB)
(72) Inventor: SERNANDEZ ARPPE, Luis, Carlos, 28039 Madrid (ES); SALVADOR P REZ, Gloria, Monserrat, 28037 Madrid (ES)
(74) Representative: Carvajal y Urquijo, Isabel
(86) International application number: PCT/ES2003/000446
(87) International publication number: WO 2004/023773

(57) **Abstract**

A dialling error notification system for visiting subscribers in a visited mobile telephony network (VPLMN) (100), a visiting subscriber being a subscriber from a home mobile telephony network (HPLMN) (200) different from the visited mobile telephony network (100). The system comprises:
a first node (11) of the visited mobile telephony network (100) comprising means for analysing a number dialled by a subscriber (201) and determining if said number dialled complies with at least one predetermined error criterion; and
means for sending a short message (SM) with a dialling error notification to the subscriber if said number dialled complies with at least one predetermined error criterion.

The invention also refers to a dialling error notification method.

## Description

### FIELD OF THE INVENTION

The invention is encompassed within the field of mobile telephony. As is well known, English acronyms and terms are normally used to refer to elements and concepts pertinent to the field. The English acronyms and terms used in this text will be explained throughout.

### BACKGROUND OF THE INVENTION

The purpose of the invention is to serve as a base for a dialling error notification service to visitors in a visited mobile telephony network (VPLMN) in relation with international roaming, i.e. when the subscriber is in a country which is not the country of his or her home mobile telephony network (HPLMN).

The mobile telephony backbone network is formed by certain main nodes which carry out the basic functions in the network, such as connecting and disconnecting the terminals, routing voice calling and sending short messages.

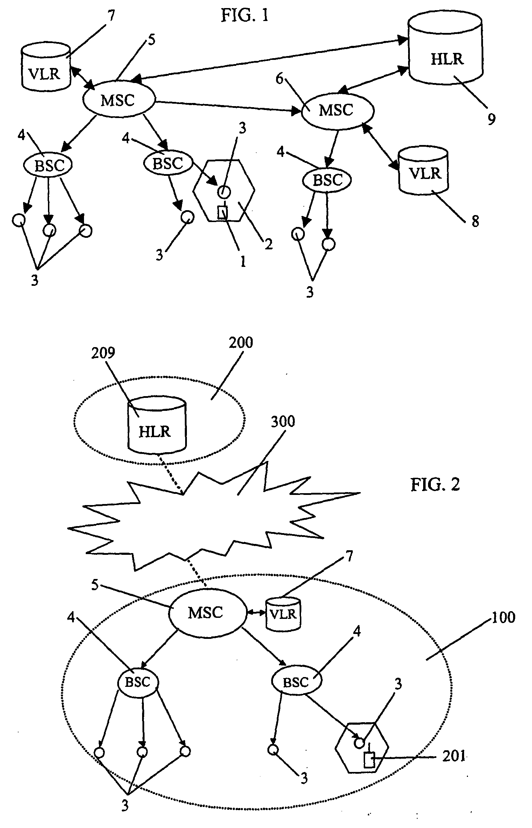

For the mobile telephony network or PLMN (Public Land Mobile Network), the geographic area is divided into cells, each one of which is serviced by a "base station" or BTS (Base Transceiver Station). Figure 1 shows a network of this type, where it can be seen how a mobile telephone 1 is in a cell 2 corresponding to a base station 3; other base stations 3 correspond to other cells of the network.

Each base station depends on a Base Station Controller, or BSC, node 4. The BSC 4 manages the activity of several base stations 3 which it is in charge of, for example, routing the calls and messages to the base station covering the recipient mobile.

In turn, several BSCs 4 depend on one switching centre or MSC (Mobile Switching Centre) (5, 6), a network node controlling several BSCs and managing the control of the location of the subscribers who are in its control area.

Furthermore, the network shown in Figure 1 comprises several Visitor Location Registers or VLRs (7, 8). The VLR is a "visiting" subscriber database which temporarily stores certain data related to subscribers who are in the network area corresponding to the VLR. Examples of data stored in the VLR are the IMSI (International Mobile Subscriber Identity), the MSISDN (the telephone number itself which is dialled to call the mobile telephone), or the TMSI (temporary identity different from the IMSI for security reasons), the location area where the subscriber has been registered and the supplementary services of the subscribing customers who, at that time, are in the network area covered by that VLR. Each VLR covers a location area. There can be several VLRs in the area covered by an MSC, but it is also possible for a VLR to contain information of areas covered by several MSCs. In some systems, there is one VLR for each MSC. The VLR is also the node to which the FSM (Forward Short Message) command is sent from the SMSC (Short Message Service Centre), with the recipient number so that the latter routes the message to the BSC where the recipient subscriber is located, in order for the corresponding base station to deliver the message to the subscriber.

(In this document, a mobile telephone, the subscriber (the person who has the mobile telephone) and the customer are referred to indistinctively).

The network also comprises a Home Location Register or HLR 9 which is the database where all the data regarding the mobile service of the subscribers of the network are stored, such as their IMSI and MSISDN identity, the VLR in which they are located (each change of location area carried out by a mobile is detected by the network and its VLR address is automatically updated in the HLR database). There is also information concerning the type of service offered to the subscriber as well as the supplementary services provided to him or her. Usually in networks with many subscribers, the subscriber data are distributed in several HLRs.

The network can also include an Authentication Centre or AUC where the "triplets" are saved. The HLR obtains the triplets through the AUC; a triplet is made up of three numbers, a key (Kc), a random number (RAND) and a signed response (SRES). The key is a parameter that the SIM (Subscriber Identity Module) card of the customer and the network have, and which never travels by radio. The network sends the random number to the subscriber, and the subscriber, with his or her key and an algorithm, generates a signed response which must be equal to the one previously generated in the network- in the AUC- by means of the same algorithm. The AUC is frequently incorporated with the HLR in the same node, which could be called "HLR/AUC" in such case.

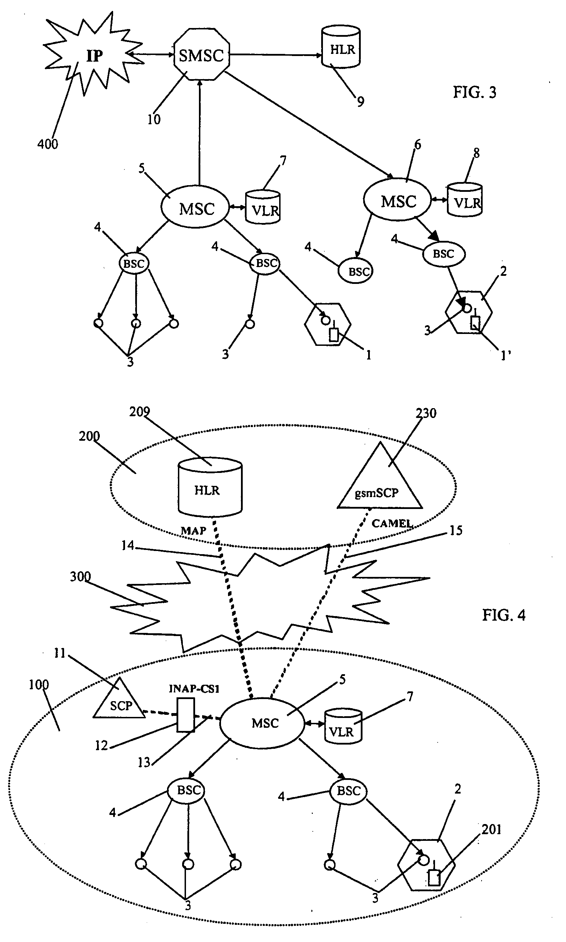

The network can also include a Short Message Service Centre or SMSC 10 (shown in Figure 3) constituting the central point of the short message service, which is a supplementary, non-obligatory service in the network (although all GSM operators currently offer it). The service consists of the SMSC, which the customer has configured in his or her mobile as his or her own, picking up the short message, checking the network and the VLR in which the recipient subscriber is located and finally sending the short message to said VLR, which in turn will be in charge of delivering it.

In summary: the subscriber, with his or her mobile telephone, can move from one cell to another of the network, which means changing BTS 3 and, at times, BSC 4, a change which is managed by the MSCs 5, 6 of the network. When the customer has changed MSC (in many systems, each MSC is associated to one VLR and they form part of the same physical equipment), then he or she also changes location area and the location information of the customer is modified in the HLR 9; thus, the HLR 9 always knows in which location area the subscriber is located.

If the network offers short message service, the transmission of said messages is managed by the SMSC 10 of the network in which the short message or SM is originated. Said SMSC consults the subscriber data (VLR and IMSI) in the HLR of the recipient customer and sends the message to the recipient VLR.

For more information concerning the MAP protocol and the basic processes of the GSM network, the ETSI: GSM 09.02: Digital Cellular Telecommunications System. Mobile Application Part (MAP) Specification can be consulted.

Each network has a determined extension, usually national. Each subscriber is underwritten as a subscriber in a home network, operated by a mobile telephony operator, in his or her country of origin. The relevant data of each subscriber are in the HLR of said network in the country of origin.

However, a subscriber of a home network or HPLMN (Home Public Land Mobile Network- mobile telephony network to which a subscriber belongs) of a first country can usually use his or her mobile telephone in mobile telephony networks of other countries as well; said networks are called "visited" networks (VPLMN- Visited Public Land Mobile Network- mobile telephony network visited by a subscriber who does not belong to said network). The concept of using the mobile telephone in a network which is not the home network is known as roaming, and the subscriber who moves through a visited network and uses the services of said network is known as a roamer.

When a visiting roamer 201 (see Figure 2) from another foreign network (HPLMN) 200 attempts to be located and use a visited network (VPLMN) 100 in a country, the first thing that he or she must do when switching on his or her mobile telephone is to synchronize it to the frequency plan of the base station (BTS) 3 which he or she is attempting to lock into. Through the BTS 3, contact is made with the VLR 7 of the visited network providing service to the geographic area in question (i.e. to the VLR corresponding to the BTS with which he or she is communicating) to request the location update.

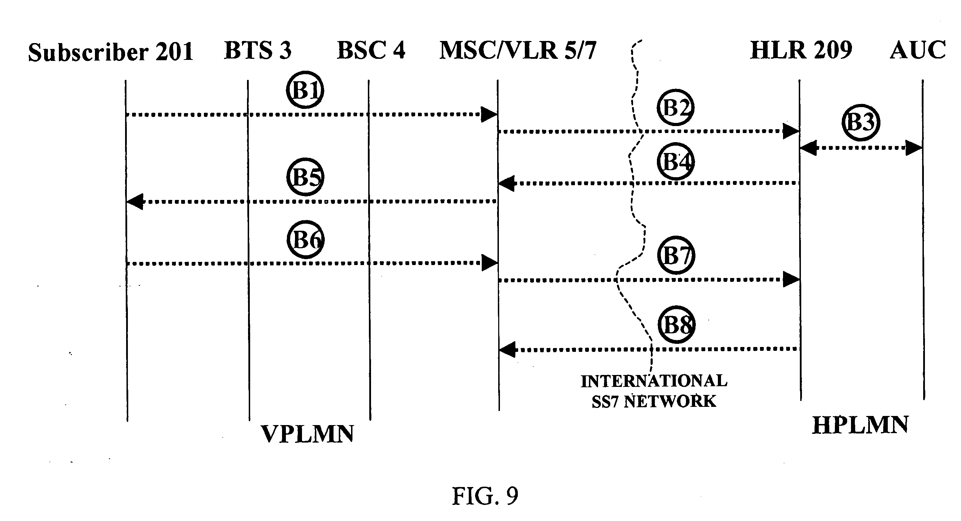

In the location update request (see Figure 9 also), the mobile telephone sends (data and commands, among others) the International Mobile Subscriber Identity, or IMSI, which constitutes a universal identifier of the mobile subscriber in the GSM world. It should not be confused with the MSISDN (Mobile Station International ISDN Number), which constitutes the public number to dial to contact the user, i.e. his or her "telephone number".

The IMSI is made up of 15 digits: the first 3 digits identify the Mobile Country Code (MCC), and the next two digits identify the Mobile Network Code (MNC). From these first 5 digits, the VLR 7 can biunivocally know the home network (HPLMN) 200 to which the roamer 201 belongs and thus determine if there is a roaming agreement between the operator of the HPLMN 200 of the roamer and the operator of the visited VPLMN 100 to which the VLR 7 belongs.

In the event that there is a roaming agreement between both operators, the VLR 7 must analyse said IMSI to:
- Compose the Mobile Global Title (MGT). This number is obtained by replacing the MCC+MNC with an E.164 identifier (ITU-T recommendation) by means of which the HLR 209 of the HPLMN 200 can be directed through the international signalling network 300. For example, for the customers of the Telecel-Portugal network who are roaming in Spain, the MCC+MNC (268 01) must be replaced with 35191, the number identifying Portugal (country code = 351) and Telecel (91) in the international SS7 network.
- Build the UpdateLocation MAP (Mobile Application Part) message, using the Mobile Global Title as the SCCP (Signalling Connection Control Part- network level of the SS7 stack; SS7 is the signalling system the mobile telephony network uses) address. The VLR 7 must indicate for this specific operator which is the MAP version and if CAMEL options are supported (the CAMEL concept will be discussed below). Said message is delivered to the SS7 signalling stack and sent to the international signalling gateways.

When it reaches the HPLMN 200, this network uses the last 10 digits of the IMSI to find the HLR 209 where the data of the mobile subscription of the roamer 201 are defined. The HLR 209 allows or refuses the location update according to whether said customer has enabled the international roaming service. In the affirmative case, and after exchanging a series of data for authentication with the VLR 7 of the visited network 100, the profile of the customer (MSISDN, information concerning basic and supplementary services, etc.) is sent thereto.

From that moment on, the roamer 201 is located in the VLR 7 providing him or her service, being considered a customer of the network 100 in which he or she is temporarily installed. Lastly, the processing in the MSC/VLR of the numbering dialled for each IMSI range (each IMSI range corresponds to a determined home network HPLMN) must be able to be configured, although in theory the roamer must be able to access the same numbering as the customers belonging to the visited network. The dialled number analysis scheme (i.e. how to obtain the routes, whether to consult an intelligent network node, etc.) may vary according to the IMSI range of the customer or, what is the same, according to the HPLMN to which he or she belongs. In other words, the MSC obtains the way to analyse the number dialled by the roamer from his or her IMSI, using a configuration table which can be modified by the operator.

To send short messages or SMs within the framework of the Short Message Service, or SMS, provided by mobile telephony operators, the usual processes standardized by GSM exist for sending a short mobile to mobile message, passing through the Short Message Service Centre or SMSC 10 of the operator (see Figure 3). However, there are many applications by means of which a message can be sent to/from the IP world (for example, sending a short message from a web page, sending a short message originating in a mobile- SMS MO- to a television contest, etc.). With the expression "IP (Internet Protocol) world", reference is made to the Internet environment; the IP world has been schematically shown with reference number 400 in Figure 3.

The SMSC 10 can receive a request to send an SMS:
- From the MSC 5, by means of a mobile-mobile process (between a mobile telephone of origin 1 and a recipient mobile telephone). The message is sent to the SMSC 10 based on the address of the service centre, which can be configured in the terminal for each operator.
- From the IP world 400, to which end the manufactures of SMSCs have implemented protocols such as the SMPP (Short Message Peer to Peer Protocol, a protocol for the communication between an SMSC and an external application).

From that moment on, the message is processed in the same manner. The SMSC consults the HLR corresponding to the recipient mobile telephone 1' and in the event that the recipient mobile is not available, the SMSC stores the message and tries to send it later, following a predefined retry policy. If the recipient mobile is available, the HLR returns the IMSI and the number of the VLR 8 corresponding to the base station 3 of the cell 2 in which the recipient mobile is installed to the SMSC 10. From that moment on, the SMSC 10 proceeds to deliver the short message by routing it to the recipient VLR 8.

The interaction between the traditional world of circuit switching networks (SS7-Signalling System 7: the signalling system used by the mobile telephony network) and packet switching networks (IP: Internet Protocol- a transmission protocol in packet switching networks) are converging into one common line.

On the other hand, the intelligent network or IN concept exists, which has been standardized by ITU and ETSI and which is based on defining a new network architecture to offer advanced telecommunication services.

The primary element of this architecture is the so-called Service Control Point, or SCP, a node which takes control of the call during a moment thereof. After a certain call-related event occurs, the switcher controlling the call suspends the processing thereof, making contact with the SCP and waiting for instructions. To this end, an SS7 intelligent network IN protocol must be used. The most common IN standards are ETSI-Core INAP CSx and AIN (Advanced Intelligent Network) for Fixed Network and CAMEL (Customized Application for Mobile Networks Enhanced Logic) for mobile network.

The SCP can carry out different tasks once it has taken control of the call: modify the recipient number, release the call, monitor basic call events (customer answers, it is busy, hangs up prior to setting up the call, etc.), download guaranteed time call units, order the reproduction of customized advertising with and without collection of digits and access external databases.

The CAMEL protocol is actually an adaptation of INAP-CS1 for a mobile network which furthermore defines new fields for the MAP protocol, in which the IN triggering criteria are defined in subscription flags which are transferred to the VLR (CSI= CAMEL Subscription Information). However, the standardization and implementation of CAMEL has been fairly behind the market demand with regard to IN services in mobile networks. As a result, "pre-pay" services were first chosen to be introduced by means of proprietor protocols in the mobile network (extensions of INAP-CS1), as well as to carry out the trigger (carrying out thereof) by means of proprietary extensions of the MAP (subscription flags in VLR). Since CAMEL is a mobile IN standard, it allows an operator to offer its customers the same services during roaming as in their HPLMN (as long as the visited network VPLMN supports CAMEL, the function is open and the customer is provided with the CSI flags in the HLR of the HPLMN). CAMEL allows the HPLMN to control the call during the set-up thereof.

However, not all networks support CAMEL, nor are all of the customers of a CAMEL network provided with CSI (CAMEL is mainly used for customers of a "pre-pay" service, for whom said control by the HPLMN is essential for charging the call).

In international roaming (i.e. roaming in which the visited network- VPLMN-corresponds to a country other than the country of the HPLMN) scenario, it is fairly common for the reamers to not have knowledge about the dialling process in international calls in the visited network. Taking into account that the overwhelming majority of calls are usually made to the country of origin, the most common errors made in said type of calls have been studied, and it has been detected that they are as follows:
- Dialling the Country Code without first dialling '+' or '00' (international call identifiers).
- Dialling '+ 00' before the country code (i.e. simultaneously using the two international call identifiers).
- Dialling only '0' and immediately after that the CC (Country Code).
- Using the '*' (asterisk) rather than the '+'.
- Dialling from the agenda in national format, as if the subscriber were located in his or her country of origin.
- For certain countries, such as the United Kingdom, including the national dialling escape code, a code which should never be included when dialling from abroad (+44 0 rest of number). This mistake was very common when calling Spain from abroad prior to the overall change of Spanish numbering. In the past, '9' constituted an escape code for dialling in Spain, which did not add any type of information. However, for dialling from abroad, said code should never be included (for example, to call Madrid, 0034 1 should be dialled, not 0034 91). After the amplification of the Spanish numbering plan so that the first digit identified the type of network (8, 9 for fixed numbers; 6 for mobile numbers), said digit had to be included in international dialling (+34 91 ..., +34 607 ...).

After studying these errors, it was considered that it would be desirable to establish a system providing the roamer with suitable information about these errors to prevent them from occurring again and/or to inform the subscriber of how to dial correctly.

Currently, calls made by reamers installed in many foreign visited networks are not subjected to any special processing. The numbering is analysed under the same routing scheme as the customers belonging to the visited network. Only small changes have been introduced in the MSCs to apply an announcement in English in the event of trying to access an inexistent number. It must be indicated that the numbering analysis in the MSCs is a rather inflexible process: it basically consists of removing and adding digits to the number dialled and setting up the route for the call to follow. It does not include complex decisions, such as analysing more in depth the faults committed in the numbering dialled by the customers, nor does it send short messages in the event of faulty dialling.

The CAMEL standard discussed in the foregoing allows the HPLMN to control the call made by the roamer at the time it is carried out. To that end, said roamer customers have special subscription flags (CSI), which allow setting up a control dialogue with an SCP of the HPLMN (specifically, with a gsmSCF- a term used in the GSM world to refer to an SCP involved in a CAMEL dialogue) during call set-up.

However, many network operators acting as a VPLMN currently have no CAMEL agreements signed with all the other mobile telephony network operators of the GSM world. Furthermore, with regard to some operators, CAMEL agreements are only applied to subscribers of the "pre-pay" service, i.e. only those customers of said "pre-pay" service are provided with CAMEL flags. For the rest of the roamers, the control of the call belongs exclusively to the visited network (VPLMN). As a result, it would be desirable to carry out a service complementary to that which CAMEL offers for customers who do not use the CAMEL service (said complementary service could be inaccessible for subscribers having CAMEL flags).

One object of the invention corresponds to offering the bases for a suitable dialling information service for visiting subscribers who do not depend on the CAMEL standard.

### DESCRIPTION OF THE INVENTION

A first aspect of the invention refers to a dialling error notification system for visiting subscribers in a visited mobile telephony network (VPLMN), a visiting subscriber being a subscriber of a home mobile telephony network (HPLMN) different from the visited mobile telephony network. According to the invention, the system comprises:
a first node of the visited mobile telephony network comprising means for analysing a number dialled by a subscriber and determining whether said dialled number complies with at least one predetermined error criterion; and
means for sending a short message (SM) with a dialling error notification to the subscriber if said dialled number complies with at least one predetermined error criterion.

Said first node can be a Service Control Point (SCP) of the visited mobile telephony network.

The system can comprise means for determining the home mobile telephony network (HPLMN) identity based on the IMSI of the subscriber.

On the other hand, the system can comprise:
means for sending a message to send a short message to an SS7-IP gateway from the first node of the visited mobile telephony network;
means for sending an http message to send a short message to a short message sending server from said SS7-IP gateway; and
means for sending a short message addressed to the subscriber from said short message sending server to a Short Message Service Centre (SMSC) of the visited network.

The system can comprise means for selecting the short message text based on the identity of the home mobile telephony network (HPLMN), for example, means for selecting the short message text based on the IMSI of the visiting subscriber.

The short message sending server can include a database with short message texts and means for selecting a short message text based on an indicator code included in the http message received from the SS7-IP gateway.

The http message discussed in the foregoing can include at least one indicator code indicating a short message text and the mobile telephone number (MSISDN) of the subscriber to whom the short message must to be sent.

The system can comprise means for sending an initial control set-up message to the first node, which comprises at least the following data: the telephone number dialled by the subscriber; the mobile telephone number (MSISDN) of the subscriber; and the IMSI of the subscriber. The means for sending an initial control set-up message to the first node can be comprised in the MSCs of the visited mobile telephony network (VPLMN), such that when a subscriber in a cell corresponding to an MSC dials a telephone number, said MSC sends the initial control set-up message to the first node.

The system can comprise control means for preventing a second short message with a dialling error notification from being sent to a subscriber if the time elapsed since a first short message with a dialling error notification was sent to the same subscriber is less than a predetermined minimum time.

The error criteria can include one or several criteria selected from the group comprising the following criteria:
- the number dialled begins with "+" followed by a sign different from a figure C, 1≤C≤9;
- the number dialled begins with "00" followed by a sign different from a figure C, 1≤C≤9;
- the number dialled is a 9-figure number beginning with a figure which is not 6, 7, 8 or 9;
- the number dialled begins with "+" or "00" followed by a country code followed by an escape code not applicable for international dialling to said country; and
- the number dialled is a number with fewer than 9 figures which is not a short code.

Another aspect of the invention refers to a dialling error notification method for visiting subscribers in a visited mobile telephony network (VPLMN), a visiting subscriber being a subscriber from another home mobile telephony network (HPLMN) different from the visited mobile telephony network. The method comprises the steps of:
(a) analysing, in a first node of the visited mobile telephony network, a first number dialled by the subscriber and determining whether said number dialled complies with at least one predetermined error criterion:
(b) sending at least one short message (SM) to the subscriber if said dialled number complies with at least one predetermined error criterion, said short message comprising at least one dialling error notification.

The first node can be a Service Control Point (SCP) of the visited mobile telephony network.

The method can additionally comprise the following step:
(c) determining the identity of the home mobile telephony network (HPLMN) of the subscriber, and, based on the home mobile telephony network (HPLMN) of the subscriber, determining whether the subscriber has the right to a dialling error notification service.

The identity of the home mobile telephony network can be determined based on the IMSI of the subscriber.

Step (c) can be carried out before step (b), and even before step (a).

Step (b) can comprise the steps of:
- sending a message to send a short message to an SS7-IP gateway from a Service Control Point (SCP);
- sending an http message to send a short message to a short message sending server from said SS7-IP gateway;
- sending a short message addressed to the visiting subscriber to a Short Message Service Centre of the visited network from said server.

The short message text can be selected based on the identity of the home mobile telephony network (HPLMN), for example, based on the IMSI of the visiting subscriber.

The text can be selected from a plurality of texts comprised in a database of the short message sending server, based on an indicator code included in the http message received from the SS7-IP gateway.

The http message can include at least one indicator code indicating a short message text, and the mobile telephone number (MSISDN) of the subscriber to whom the short message must be sent.

The method can comprise a first step which comprises sending an initial control set-up message to the first node, comprising at least the following data: the telephone number dialled by the subscriber; the mobile telephone number (MSISDN) of the subscriber; and the IMSI of the subscriber. The initial control set-up message can be sent from an MSC of the visited mobile telephony network corresponding to the corresponding cell in which the subscriber is located.

Before sending a short message with a dialling error notification to the subscriber, it can be checked that a predetermined minimum time has elapsed since a previous short message with a dialling error notification was sent to the same subscriber, and if said predetermined minimum time has not elapsed, the short message with a dialling error notification is not sent.

The error criteria can include one or several criteria selected from the group comprising the following criteria:
- the number dialled begins with "+" followed by a sign different from a figure C, 1≤C≤9;
- the number dialled begins with "00" followed by a sign different from a figure C, 1≤C≤9;
- the number dialled is a 9-figure number beginning with a figure which is not 6, 7, 8 or 9;
- the number dialled begins with "+" or "00" followed by a country code followed by an escape code not applicable for international dialling to said country; and
- the number dialled is a number with fewer than 9 figures which is not a short code.

It is possible to carry out the method only for visiting subscribers who are not provided with a CAMEL service O-CSI flag.

### BRIEF DESCRIPTION OF THE DRAWINGS

A series of drawings will be very briefly described below which will help to better understand the invention, and which are expressly related to an embodiment of said invention, which is presented as an illustrative and non-limiting example thereof.
Figures 1-3 schematically show the relationship between some important elements of conventional networks (according to the State of the Art).
Figure 4 schematically shows a configuration of a network according to a preferred embodiment of the invention.
Figure 5 schematically shows the relationship between the SCP and the SS7-IP SDP-gateway.
Figure 6 schematically shows the relationship between the SS7-IP SDP-gateway, the IP server and the Short Message Service Centre SMSC.
Figure 7 shows a flowchart showing the logic of the dialling error notification service in the SCP.
Figure 8 shows a flowchart showing a process carried out in the MSC of the visited network.
Figure 9 schematically shows a visiting subscriber location update process (according to the State of the Art).
Figure 10 schematically shows some steps of the process according to a preferred embodiment of the invention.

### DESCRIPTION OF A PREFERRED EMBODIMENT OF THE INVENTION

Figure 4 schematically shows a network corresponding, for the most part, to the State of the Art, as discussed in the foregoing (the conventional components have the same reference numbers as in the figures related to the State of the Art). In other words, the VPLMN 100 includes its base stations 3, its BSCs 4, its MSCs 5 and VLRs 7, just as in the conventional networks discussed in the foregoing. Furthermore, an HPLMN 200 network is shown with its HLR 209 in which data relevant to the subscriber 201 subscribed in said HPLMN 200 but who is currently visiting (roaming) in a cell 2 of the VPLMN 100 are stored.

The MSC 5 of the VPLMN 100 can establish a CAMEL -control dialogue (schematically shown in Figure 4 with reference number 15) with an SCP 230 of the home network HPLMN 200, specifically with a gsmSCF.

On the other hand, just as in conventional systems, there are also means for dialogue by means of MAP messages 14 between the MSC 5 of the VPLMN 100 and the HLR 209 of the HPLMN 200, for example, so that the visiting subscriber can use his or her mobile telephone in the visited network VPLMN 100.

However, the visited network VPLMN 100 also includes a Service Control Point SCP 11 accessible from the MSC 5 through an STP 12 (Signalling Transfer Point- an intermediate signalling point of the network contributing to routing commands and messages to the recipient point). Access is made through an INAP-CS1 dialogue schematically shown in Figure 4 with reference number 13.

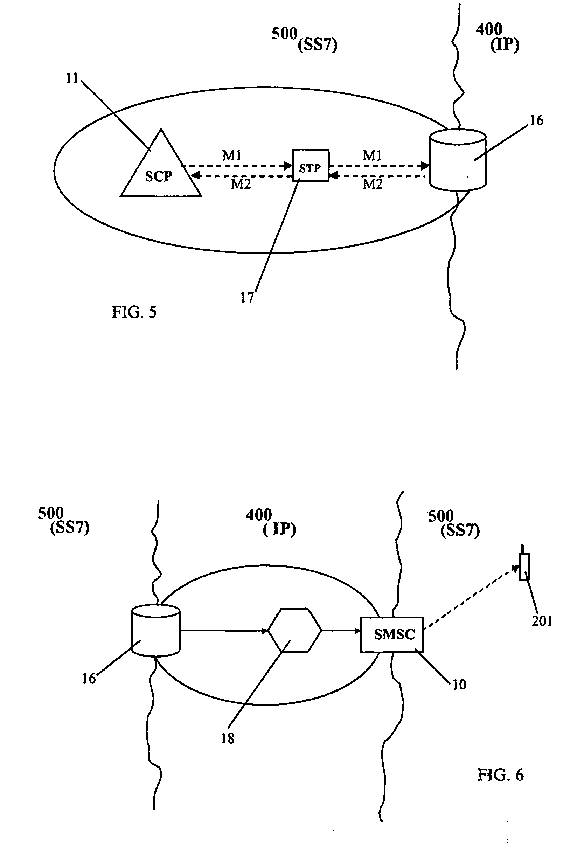

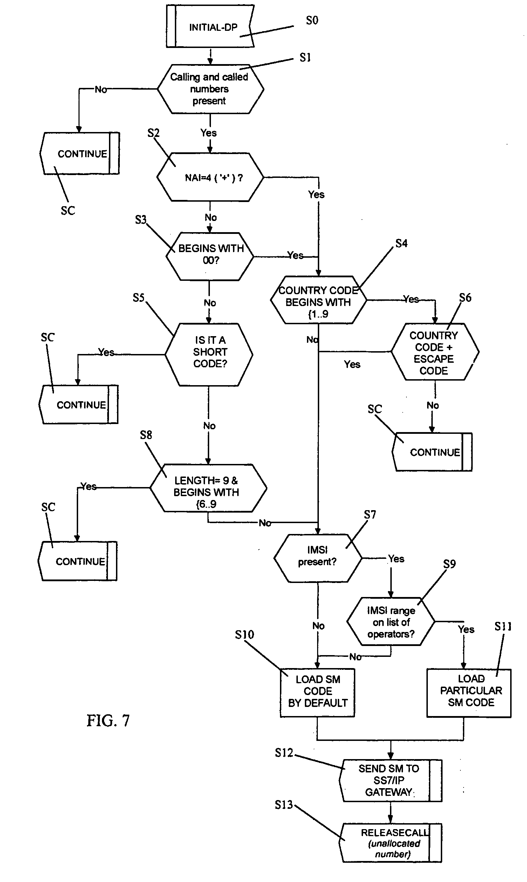

Starting from Figure 4 and according to a preferred embodiment of the invention, the following operations are carried out:
1) The unit corresponding to the MSC/VLR (reference numbers 5 and 7 of the VPLMN network 100 in Figure 1) detects that a visiting subscriber (roamer) dials a telephone number. Based on the IMSI of the subscriber, it is determined whether he or she belongs to a home network (HPLMN) with which there is a dialling error notification agreement. If such agreement exists, the MSC/VLR unit sets up an INAP-CS1 control dialogue (reference number 13 in Figure 4) with the SCP 11, which is what contains the logic of the dialling error notification service. Said dialogue is usually carried out through one or several STPs 12.
2) The SCP 11 analyses the arguments of the *InitialDP* CS1 operation (initial control set-up message) and carries out the logic of the dialling error notification service to verify whether an erroneous dialling case has occurred; preferably, an erroneous dialling case is understood as a case in which at least one of a series of predetermined error criteria is complied with, such as, for example, the following:
   - Dialling the Country Code without first dialling '+' or '00' (international call identifiers).
   - Dialling '+00' before the Country Code; i.e. simultaneous use of the two international call identifiers.
   - Dialling only one '0' and then immediately dialling the Country Code.
   - Use of '*' (asterisk) rather than '+'.
   - Dialling from the agenda in national format, as if the subscriber were located in his or her country of origin. (However, it is not always possible to determine whether this error criterion is complied with. For example, if the subscriber moves in a Spanish VPLMN and if the number dialled, presumably obtained from the agenda of the mobile as if it were in his or her country of origin, begins with '6', '7', '8' or '9 and is 9 digits long, it cannot be identified whether the customer is actually trying to access a Spanish national number or a national number of his or her country of origin. Due to this ambiguity, the dialling error notification service will consider the call correct, i.e. in the event of the example given, with a destination in Spain).
   - For certain countries, such as the United Kingdom, the inclusion of the escape code for national dialling, which should never be included when dialling from abroad (+44 0 rest of the number).
3) If no error criterion is complied with, it is assumed that there is no error and the call is allowed to continue (the SCP 11 will send the *Continue* operation to the MSC 5).
   If one of the predetermined error criteria is complied with, it is assumed that the international dialling is erroneous, and the SCP 11 will send:
   - On one hand, the *ReleaseCall* operation to the MSC 5, such that the call is released with a voice announcement indicating that the number dialled does not exist.
   - On the other hand, an intelligent network (IN) operation for accessing the database (supplier proprietor protocols or ETSI-CS2 protocols, such as Search, can be used). Said operation must be sent to a platform carrying out functions of an SDP (i.e. it interprets the operation received) (SDP is an acronym for Service Data Point and corresponds to a node which stores service and/or customer data in an intelligent network architecture, being able to return and/or modify data according to requests of the SCP), and, at the same time, of a gateway with the IP world (Internet). Figure 5 schematically shows the relationship between the SCP 11 and the SS7-IP SDP-gateway 16, which functions as a gateway or bridge between the SS7 environment (reference number 500 in Figure 5) and the IP environment (400).
4) The SS7-IP SDP-gateway (or, simply, gateway) 16 receives (through an STP 17) the SS7 message (reference number M1 in Figure 5) with the arguments necessary for sending the short message (SM) to the customer. Basically, said SS7 message must include a short message identifier code, the MSISDN (telephone number) of the subscriber who originated the call (i.e. of the visiting mobile telephone 201) and an identifier of a server 18 of the IP domain in charge of generating the short message (SM). From these arguments, the SDP-gateway builds an http (Hyper Text Transfer Protocol- application protocol for IP transmission) request to said server 18 of the IP domain (see Figure 6). Furthermore, the gateway 16 can send a confirmation message (M2) to the SCP 11. Said message can be initiated from the server 18 (once it has correctly processed the http request).
5) The server 18 of the IP domain will extract the data necessary for generating a short message. Based on the short message identifier code, the contents (text) thereof will be obtained from a database. Knowing the MSISDN of the roamer and the text of the educational short message, a request to send will be carried out to the SMSC 10 (in the IP protocol which the latter element supports).
6) Once the short message has reached the SMSC 10, it is delivered to the mobile telephone 201 of the roamer following conventional GSM processes. The only particularity is that the SMSC must consult the HLR 209 of the home network (HPLMN) 200 (*SendRoutingInfoForSMS* MAP operation) to check the IMSI and the VLR identifier. The SMSC 10, when it receives the number of the VLR 7 corresponding to the base station 3 of the cell 2 in which the mobile telephone 201 of the roamer is located, will directly route said message for the delivery thereof without passing through international gateways. In other words, the short message never passes to international signalling 300, since the SMSC 10 is part of the visited network VPLMN 100 itself. An international transaction occurs only to obtain the data necessary for routing the message (specifically, the consultation of the SMSC 10 with the HLR 209 of the home network 200).

For greater clarity, some aspects of the invention are explained below in detail, starting from the following three aspects:
a- Configuration of the MSC/VLR (5/7) where the visiting subscriber is installed to carry out the IN trigger to the SCP 11 (suspension of the call processing and initial message control set-up). This trigger must be configured for each operator to which the dialling error notification service is to be offered.
b- Carrying out the logic of the dialling error notification service, analysing the signalling arguments sent by the switching network. Based on the data received, the logic determines whether the international dialling is correct or not, and according to this, either carries out or does not carry out a request to send a short message to the SS7-IP SDP-gateway.
c- Flow and interaction with the IP world: the SS7-IP SDP-gateway 16 translates the SS7 message into an http request to a server 18 of the IP domain, a server capable of generating short messages, which obtains the contents of the short message to be sent and carries out the final request to the SMSC 10 for it to be sent. From this point, the SMSC 10 sends the short message to the recipient roamer by conventional methods.

The first aspect discussed refers to the "trigger" of the dialling error notification service in the SCP 11, and the building of an initial control message (*InitialDP*). Said application message will be delivered to the lower layers of the SS7 signalling protocol (TCAP- Transaction Capability Application Protocol, SCCP- Signalling Connection Control Part and MTP- Message Transfer Part), which will be in charge of routing it through the STPs 12 until reaching the SCP 11 where the logic of the service lies.

It has been decided to make the service of the invention incompatible with any CAMEL service which the visiting subscriber could be provided with. In the event that said subscriber is provided with an O-CSI, the CAMEL-*InitialDP* message will be unconditionally set up to the SS7 address specified in the *gsmSCFAddress* field (belonging to O-CSI). Said in another manner, the MSC/VLR of the visited network (VPLMN) must immediately contact, through international SS7 network 300, the SCP (gsmSCF 230) of the HPLMN 200, the address of which is expressly specified in the O-CSI flag. From that moment, the SCP (gsmSCF 230) of the HPLMN takes control of the call, being able to set up different actions (among which is the modification of the recipient number). (In the event that the SCP of the HPLMN 200 does not modify the call recipient number, the MSC of the visited network could set up a trigger to the local dialling error notification service. However, such a solution would be somewhat complicated, this being outside of the preferred embodiment of the invention. This preferred embodiment attempts to offer a "pre-CAMEL" application to visiting subscribers. It is actually a concept that conflicts with CAMEL. The CAMEL standard allows an HPLMN to control a call made by a roamer in real time when it is being set up. Therefore, if the roamer is provided with O-CSI in the VLR, the visited network is transferring (it must transfer) control of the call to the HPLMN of the subscriber, enabling access in order to implement the dialling error detection and/or notification functions (functions carried out locally for non-CAMEL subscribers)).

The trigger must be configured on the basis of the identity of the operator of the HPLMN of the visiting subscriber (which can be identified based on the IMSI of the visiting subscriber), such that the dialling error notification service can be activated in a selective manner according to the identity of the operator of the HPLMN of the visiting subscriber. Thus, the number of operators to which the service is offered can be gradually activated. Overloads in the SCP 11, in the SS7 signalling network (the STPs), and in the other systems involved in the dialling error notification service (SS7-IP SDP-gateway, IP nodes for sending short messages, etc.) are thus prevented. The MSCs can thus be configured such that the dialling error notification service is carried out for subscribers of some HPLMNs but not for subscribers of other HPLMNs.

The ASN.1 format, at application level, for the *InitialDP* CS1 message, used to transfer control of the call to the SCP 11, is shown below:

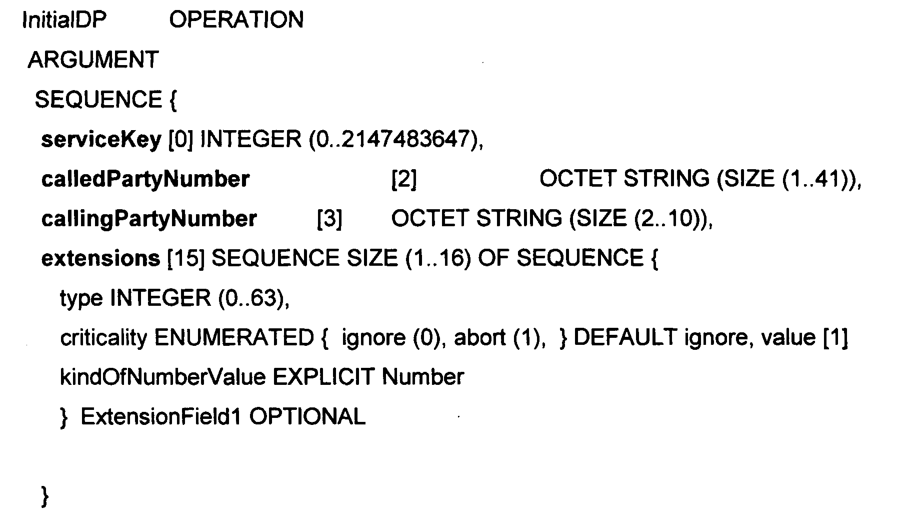

ETSI Core INAP CS1 is a standard oriented towards fixed networks. As a result, it lacks a specific field for sending the contents of the IMSI (specific information of mobile networks). However, the standard allows certain freedom for an operator to define extensions where it can send said type of information. Sending said extensions, as well as the contents thereof, is specific information of the network operator. For the dialling error notification service for visitors, the *InitialDP* message contains an extension in which the IMSI is sent for the correct processing thereof by the logic in the SCP 11.

The SCP 11 will decode the arguments sent in the *InitialDP* upon receiving said message:
- The **ServiceKey** is an identifier which the SCP will use for addressing the logic of the error notification service (and SCP can process different service logics according to said parameter).
- The **CalledPartyNumber** contains the number dialled. Said number will be object of a thorough analysis to determine possible faults.
- The **CallingPartyNumber** contains the calling number (MSISDN). The SCP 11 needs it to determine the destination of the educational short message (SM) in the event of erroneous dialling.
- Lastly, the IMSI (encoded within an **extension**) contains information of the home network (HPLMN) to which the customer belongs. The contents of the educational short message can be customized, depending on said network, for example, sending a message in the language of the country of the HPLMN.

In the SCP 11, the logic of the service carries out a thorough analysis to detect the most common errors in international calls, in line with that which has been discussed in the foregoing. To be certain that all these errors are detected, the service logic preferably carries out the following checks:
i) If the recipient number begins with '+' (NatureOfAddress parameter = 4 - international -), and the first digit does not belong to the 1..9 range, then it is an erroneous number (the first digit of a country code can never be '0', much less a hexadecimal digit such as '*' or '#').
ii) If the recipient number begins with '00', and the next digit does not belong to the 1..9 range, then it is also an erroneous number.
iii) If the checks carried out in sections 1 and 2 are successfully overcome, it is necessary to know if the destination country has an escape code for national dialling. If, for example, in the case of the United Kingdom, the number dialled begins with +440 or 00440, then it is an erroneous call. If an international number overcomes this last check, it will be considered a correct call, after which the SCP will allow the call to continue (sending of the *Continue* operation to the MSC 5 to return control of the call to it).
iv) If none of the previous conditions are complied with, the customer may be trying to access the national numbering plan of his or her country incorrectly or is trying to access the numbering plan of the visited country. The logic of the invention checks whether this last condition is complied with. At this point, it is always necessary to take into account an obvious ambiguity: there may be a collision with the numbering plan of the country of origin. The visiting subscriber may be trying to access his or her agenda in which he or she may have a number in national format which coincides with the format of the country of the visited network (VPLMN). One very clear example -can be located in the mobile numbering plan of Portugal with regard to Spain. For internal dialling in Portugal, the 91 range is reserved for the Telecel® mobile network. A Portuguese roamer may try, for example, to dial 91XXXXXXX when he or she is located in a Spanish network. In this case, it is impossible to determine whether the customer is erroneously trying to make contact with a Portuguese mobile through dialling from the agenda, or if on the contrary, he or she wishes to contact a number of the Spanish province of Madrid (fixed telephones in Madrid have 9-digit numbers beginning with "91").

However, a dialling error notification service based on the invention and implement in a Spanish mobile network could carry out the following checks:
- If the number dialled has 9 digits and begins with 6, 7, 8 or 9 (ranges assigned to Spanish fixed or mobile networks), the call will be allowed to continue.
- If the number dialled has fewer than 6 digits (short code access possibility), the call will be allowed to continue.

If the dialling coincides with any of the erroneous call criteria, it proceeds in the following manner:
1. From the IMSI (which biunivocally identifies the HPLMN), the logic of the invention, implemented in the SCP 11, extracts an identifier code from the educational short message to be sent to the customer. The SCP 11 sends to the SS7-IP SDP-gateway an order or message to send a short message by means of a database access IN protocol (it can be a specific network operator proprietary protocol or an ETSI-CS2 prototocl ― *Search* operation-). In said SS7 message (M1 in Figure 5), the information necessary to complete the sending of the message will be sent: the identifier code of the educational short message, the identifier of the platform for sending the short message (i.e. the identifier of the server 18), and the recipient number (MSISDN) (which will coincide with the telephone number of the mobile telephone 201 of the roamer subscriber). This message will be routed through the STPs 17 to the SS7-IP SDP-gateway 16.
2. The SCP 11 releases the call by means of the CS1 *ReleaseCall* operation. Said operation is sent back to the MSC 5. The specific reason for releasing the call is a specific piece of data of the network operator. For example, the reason may be *unallocated number*. After receiving this reason, the MSC 5 applies to the customer, for example, a generic text in English indicating that the number dialled does not exist.

Another aspect of the invention discussed in the foregoing refers to sending the educational short message. The key element for processing the educational short message in the IP domain is the SS7-IP SDP-gateway 16. This element is a platform carrying out translation functions of an SS7 message (which has a series of key arguments for sending the short message) in an http request, which will be processed in the IP world 400.

The SS7-IP SDP-gateway 16 has configuration tables loaded therein for determining the IP address of the server 18 in charge of generating and sending the short messages (SM). The SS7-IP gateway sends an http message to said IP address indicating the short message identifier code (there may be, for example, one specific short message code for each HPLMN with which there is a dialling error notification service agreement and one general short message identifier code applied to HPLMNs with the operators of which there are no existing agreements for such service) and the recipient MSISDN of said short message. A model for said http message is shown below:
http//:servidor_sms.vodafone.es/mensajes_imv/imv?msisdn=n°destino&token=identific ador_SMS

Preferably, the gateway 16 has a flow control logic for sending short messages implemented therein. One very foreseeable behaviour of the customers when they incorrectly dial is to retry the call. Since the reception of an educational short message takes some time (about several seconds) from the corresponding incorrect dialling, it is suitable to have a control mechanism to prevent an avalanche of one short message for each incorrect dialling. With this mechanism:
- Possible overloads in the SS7 network as well as in the IP network are prevented.
- A bothersome effect for the final subscriber is prevented: it would be bothersome to receive the same educational short message several times, which would be counterproductive if the intention is to provide an educational notification for the purpose of increasing the degree of satisfaction of the subscriber.

For each operation of sending an educational short message initiated through the SS7-IP SDP-gateway 16, said gateway will include the MSISDN number of the customer to whom the message is sent in a table. A time mark indicating when said operation took place will be included along with said number. When the SS7-IP SDP-gateway receives an SS7 operation from the SCP 11 to send an educational short message, the SDP-gateway 16 consults whether the MSISDN is included in said table. In an affirmative case, it checks the time mark and analyses whether a minimum time (for example, 15 minutes) has elapsed since said time mark (a configurable timer, for example, can be used). If said minimum time has not elapsed, the gateway 16 does not send the http message to the server 18, likewise sending a correctly processed message confirmation M2 to the SCP 11 (i.e. the control to prevent sending multiple educational short messages consecutively in the event of repeating several erroneous dialling attempts within a short time interval is carried out in the gateway 16 and is somewhat transparent for the SCP 11).

On the other hand, the server 18 for sending short messages carries out the following two actions:
- Loading the educational short message text from the short message identifier code (the SCP 11 sends a code univocally identifying a text stored in a database of the server 18).
- Carrying out a CGI (Common Gateway Interface- mechanism for remotely carrying out services by means of http) to send said message by means of SMPP or another protocol of the IP world to the SMSC 10, which will be in charge of the distribution thereof to the recipient (the mobile telephone 201) by means of conventional GSM processes.

Both functions (obtaining the short message text and the CGI for the sending thereof) can be carried out in different physical machines, this depending exclusively on the architecture used by the operator of the network.

Figure 7 schematically shows the logic of the SCP 11.

In step S0, the SCP receives the *InitialDP* initial control message with:
- the "**ServiceKey**" identifying the dialling error notification service;
- the "**CalledPartyNumber**" which is the number dialled;
- the "**CallingPartyNumber**" which is the mobile telephone number (MSISDN) 201 making the call; and
- the IMSI of the mobile telephone making the call.

In step S1, the SCP checks that the "CalledPartyNumber" and "CallingPartyNumber" parameters are present in the *InitiaIDP* message received. If they are present, it moves on to step S2. If not, the SC action is carried out, consisting of sending a *"Continue"* message to the MSC 5, whereby the MSC carries out the conventional analysis of the number dialled and obtains the route to set up the call.

In step S2, the analysis of the number dialled begins; it is checked whether it begins with "+"; if it begins with "+", it moves on to step S4; otherwise, it moves on to step S3.

In S3, it is checked whether the number begins with "00"; if it begins with "00", it moves on to step S4, otherwise it moves on to S5.

In S4, it is checked whether the country code begins with a digit from 1 to 9; in the event that it does begin with such digit, it moves on to S6; otherwise, it moves on to S7.

In S5, it is checked whether the number is a "short code"; in the event that it is, it goes to SC (which has already been discussed); in the event it is not, it goes to S8.

In S6, it is checked, according to the detected country code, whether a country code as well as an escape code which should not be dialled in said country, have been dialled; in the event they have, it goes to S7. In the event they have not, it goes to SC.

In S7, it is checked whether the IMSI is present in the *InitialDP*. If it is present, it moves on to S9; if not, it moves on to S10.

In S8 (specific step for an application in a Spanish network) it is checked whether the length of the number dialled is nine figures and whether it begins with a figure within the 6-9 interval; in the case it does, it goes to SC. In the event it does not, it goes to S7 (described in the foregoing).

In S9, it is checked whether the IMSI received in the *InitialDP* message (step S0) corresponds to the IMSI range corresponding to an HPLMN operator for which a particular educational short message is expected (for example, due to an agreement signed with by said operator). In the event that it does, it goes to step S11, in the event it does not, it goes to S10.

In S10, a short message identifier code corresponding to a short message with "standard" or "default" text stored in the database of the server 18 is loaded (in the message M1 shown in Figure 5); this text corresponds to the short messages sent to subscribers corresponding to operators that should not receive a special treatment (for example, since there is no special dialling error notification service agreement with said operators).

In step S11, a short message code corresponding to a specific short message selected according to the operator of the HPLMN 200 corresponding to the subscriber of the mobile telephone that carried out the dialling is loaded (in the message M1 shown in Figure 5); the text could have been established in an agreement signed between the operator of the VPLMN and the operator of the HPLMN.

In step S12, the message M1 (see Figure 5) is sent to the SS7-IP gateway 16, from where the http message is sent to the server 18 (see Figure 6).

Then, in step S13, a *ReleaseCall* message is sent to the MSC 5.

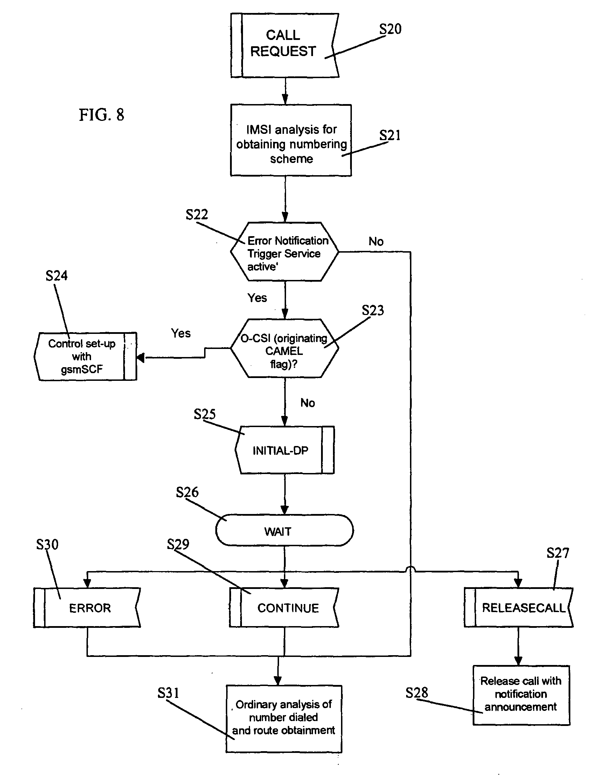

On the other hand, Figure 8 shows a process which is carried out in the MSC 5 of the HPLMN corresponding to the cell in which the visiting subscriber makes the call. The steps which are carried out are the following:
S20: "CALL REQUEST" (a call request consists of the MSC receiving an outgoing call request from a customer located in an area to which said MSC provides service. Said call request is originated after the customer dials a number and contact with the network is established through radio).
S21: "Analysis of IMSI for obtaining the numbering scheme" (the IMSI received in the call request must direct the analysis mode- numbering scheme- of the number dialled for obtaining the processing of the call).
S22: "Visitor dialling error notification service trigger active". (If the trigger is active, it moves on to step S23; if it is not, it moves on to step S31. (Trigger means, in a strict sense, "trigger condition" or "condition of control set-up with SCP". From the IMSI range, the numbering scheme can be configured: this means that it can be configured whether or not to carry out the IN trigger, and all that individually for each IMSI range. In other words, there could be an HPLMN for the customers of which it did not want to invoke the dialling error notification process, analysing the call by means of the ordinary processes associated to basic calls of switched networks).
S23: it is checked whether the visiting subscriber has the O-CSI flag ("CAMEL flag"); if he or she has this flag, it moves on to step S24 (whereby the visited network disregards the dialling error notifications; control over the call passes to the HPLMN); otherwise, it passes to S25.
S24: it proceeds according to CAMEL (a CAMEL trigger is carried out to the gsmSCF 230 (Figure 4), etc.). This process is known and does not require further explanations.
S25: the *InitialDP* message is sent (which is received by the SCP 11 in step S0 in Figure 7). Then it moves on to step S26.
S26: "Wait"; here, the MSC 5 waits until one of the following three events occurs:
   - S27: the MSC receives the "*ReleaseCall*" message from the SCP 11 (step S13 in Figure 7) and moves on to step S28, in which the call is released (the call is not carried on) and a generic announcement (for example, in English) indicating that the number dialled does not exist is sent to the mobile telephone.
   - S29: the MSC receives the "CONTINUE" message from the SCP (this message is sent in steps SC shown in Figure 7); in such event, it moves on to S31.
   - S30: an "ERROR" message occurs because a time exceeding a predefined threshold has elapsed without either of steps S27 and S29 having occurred. In such event, the MSC aborts the wait state (step S26) and proceeds to step S31 (this is done so that the call is not left "hanging" in the event that the dialling error service is not correctly functioning; this service is a "complementary" service designed to provide better customer service, and poor functioning of this service should not negatively affect basic service, i.e. the possibilities to make calls).
S31: conventional analysis of the number dialled and obtaining the route for the call.

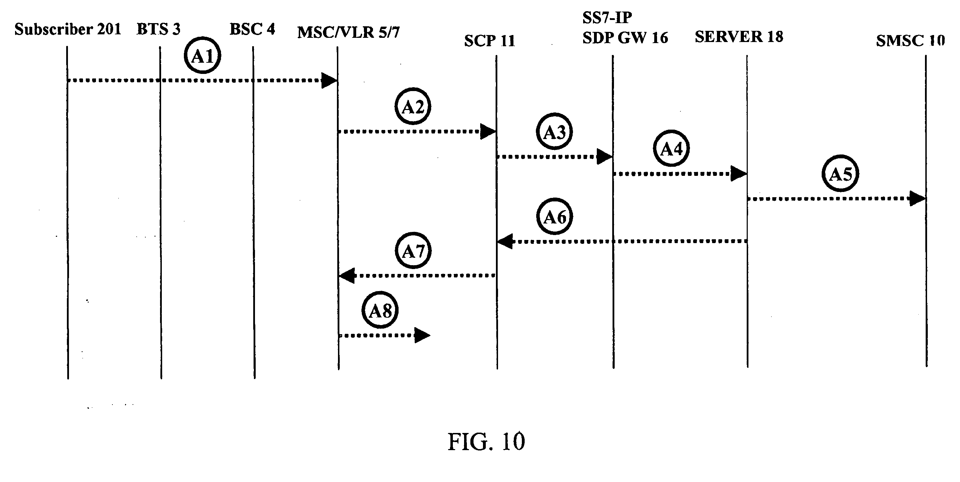

To even better facilitate understanding of the invention, reference to Figures 9 and 10 is made below.

Figure 9 schematically shows a position update process for a visiting subscriber (according to the State of the Art); the figure shows the following steps:
*B1*: Location update request by radio (through the base station 3 of the cell in which the subscriber is located).
*B2*: Authentication information request to the HLR 209 of the HPLMN.
*B3*: Obtaining the triplets. The HLR obtains the triplets through the AUC.
*B4*: Sending the authentication triplets from the HLR to the VLR 7 of the visited network.
*B5*: Sending random authentication number (RAND).
*B6*: Sending singed response (SRES) for authentication.
*B7*: Update position request (UpdateLocation) to the HLR of the HPLMN.
*B8*: Sending the customer profile (InsertSubscriberData) to the VLR 7.

Figure 10 schematically shows some steps of the process according to a preferred embodiment of the invention.
*A1*: SETUP message for call set-up of the roamer (of the mobile telephone 201 of the subscriber)
*A2*: Configuration of INAP-CS1 trigger to the SCP 11 according to the IMSI of the subscriber
*A3*: For erroneous dialling, message to order sending educational short message
*A4*: Http message with the parameters necessary for sending the educational short message
*A5*: Sending the short message by SMPP or another IP-oriented protocol
*A6*: Sending confirmation from the server 18 to the SCP 11 through the gateway 16. (The server 18 initiates this confirmation once the http message has been processed. However, when the gateway 16 decides to not send said http message because the time elapsed since a previous message to the same customer does not exceed the established minimum time, the gateway 16 takes charge of generating and sending a sending confirmation to the SCP, since the mechanism for preventing sending multiple short messages with identical contents to the customer, must be a transparent theme for the SCP, as discussed in the foregoing).
*A7*: Call release with announcement (erroneous call) or else continue (correct call).
*A8*: Ordinary call set-up (only in correct calls).

The invention provides a base for an error notification service which implies an aid to visiting roamers from other networks in dialling correctly, since those roamers can receive an educational notification (in their own language and adapted to what the operator of the HPLMN of the roamer deems suitable).

It is a mechanism for dialling analysis which allows the transfer of call control to the SCP. Said node is capable of implementing a more flexible and thorough analysis that that which a traditional switcher (MSC) can carry out.

At the same time it constitutes a non-CAMEL intelligent network solution for roamers; this solution is exclusively implemented in the visited network, but roamers have the sensation that they are receiving the educational short messages from their HPLMN (as if their HPLMN is controlling the numbering faults and sending the corresponding short messages).

The contents of the short message can be customized at the level of the operator of the home network. It can also be decided to not activate the function for certain operators.

It is a non-critical added-value service. In other words, if the mechanism fails (for example, the process carried out in the SCP), the call must preferably continue, being analysed by means of conventional circuit switching.

According to the preferred embodiment described in the foregoing, the invention involves the interconnection between the SS7 signalling and IP worlds, for the purpose of ordering sending a short message (SM) from an SCP node. Currently, no intelligent network/CAMEL standard allows said sending by means of SS7 interface between SCP and SMSC.

Throughout the present description and claims, the word "comprise" and variations thereof, such as "comprising", do not intend to exclude other steps or components.

## Claims

1. A dialling error notification system for visiting subscribers in a visited mobile telephony network (VPLMN) (100), a visiting subscriber being a subscriber from a home mobile telephony network (HPLMN) (200) different from the visited mobile telephony network (100), **characterised in that** it comprises:
a first node (11) of the visited mobile telephony network (100) comprising means for analysing a number dialled by a subscriber (201) and determining whether said dialled number complies with at least one predetermined error criterion; and
means for sending a short message (SM) with a dialling error notification to the subscriber if said dialled number complies with at least one predetermined error criterion.

2. A system according to claim 1, **characterised in that** said first node is a Service Control Point (SCP) (11) of the visited mobile telephony network (100).

3. A system according to any of the previous claims, **characterised in that** it comprises means for determining the identity of the home mobile telephony network (HPLMN) based on the IMSI of the subscriber.

4. A system according to any of the previous claims, **characterised in that** it comprises:
means for sending a message (M1) to send a short message to an SS7-IP gateway (16) from the first node (11) of the visited mobile telephony network (100);
means for sending an http message to send a short message to a short message sending server (18) from said SS7-IP gateway (16);
means for sending a short message addressed to the subscriber (201) to a Short Message Service Centre (SMSC) (10) of the visited network (100) from said short message sending server (18).

5. A system according to any of the previous claims, **characterised in that** it comprises means for selecting the short message text based on the identity of the home mobile telephony network (HPLMN).

6. A system according to claim 5, **characterised in that** it comprises means for selecting the short message text based on the IMSI of the visiting subscriber.

7. A system according to claim 4, **characterised in that** the short message sending server (18) includes a database with short message texts and means for selecting a short message text based on an indicator code included in the http message received from the SS7-IP gateway (16).

8. A system according to claim 4, **characterised in that** the http message includes at least one indicator code of a short message text and the mobile telephone number (MSISDN) of the subscriber (201) to whom the short message must be sent.

9. A system according to any of the previous claims, **characterised in that** it comprises means for sending an initial control set-up message to a first node (11), comprising at least the following data: the telephone number dialled by the subscriber; the mobile telephone number (MSISDN) of the subscriber; and the IMSI of the subscriber.

10. A system according to claim 9, **characterised in that** the means for sending an initial control set-up message to the first node (11) are comprised in the MSCs (5, 6) of the visited mobile telephony network (VPLMN), such that when a subscriber in a cell (2) corresponding to an MSC (5) dials a telephone number, said MSC sends the initial control set-up message to the first node (11).

11. A system according to any of the previous claims, **characterised in that** it comprises control means for preventing a second short message with a dialling error notification from being sent to a subscriber if the time elapsed since a first short message with a dialling error notification was sent to said subscriber is less than a predetermined minimum time.

12. A system according to any of the previous claims, **characterised in that** the error criteria include one or several criteria selected from the group comprising the following criteria:
- the number dialled begins with "+" followed by a sign different from a figure C, 1≤C≤9;
- the number dialled begins with "00" followed by a sign different from a figure C, 1≤C≤9;
- the number dialled is a 9-figure number beginning with a figure which is not 6, 7, 8 or 9;
- the number dialled begins with "+" or "00" followed by a country code followed by an escape code not applicable for international dialling to said country; and
- the number dialled is a number with fewer than 9 figures which is not a short code.

13. A dialling error notification method for visiting subscribers in a visited mobile telephony network (VPLMN) (100), a visiting subscriber being a subscriber from a home mobile telephony network (HPLMN) (200) different from the visited mobile telephony network (100), **characterised in that** it comprises the steps of:
(a) analysing in a first node (11) of the visited mobile telephony network (100) a number dialled by the subscriber and determining whether said number dialled complies with at least one predetermined error criterion;
(b) sending at least one short message (SM) to the subscriber if said dialled number complies with at least one predetermined error criterion, said short message comprising at least one dialling error notification.

14. A method according to claim 13, **characterised in that** the first node is a Service Control Point (SCP) (11) of the visited mobile telephony network (100).

15. A method according to any of claims 13 and 14, **characterised in that**
(c) the identity of the home mobile telephony network (HPLMN) of the subscriber is determined and based on the home mobile telephony network (HPLMN) of the subscriber, it is determined whether the subscriber has the right to a dialling error notification service.

16. A method according to claim 15, **characterised in that** the identity of the home mobile telephony network is determined based on the IMSI of the subscriber.

17. A method according to any of claims 15 and 16, **characterised in that** step (c) is carried out before step (b).

18. A method according to claim 17, **characterised in that** step (c) is carried out before step (a).

19. A method according to any of claims 13 to 18, **characterised in that** step (b) comprises:
- sending a message (M1) to send a short message to an SS7-IP gateway (16) from a Service Control Point (SCP) (11);
- sending an http message to send a short message to a short message sending server (18) from said SS7-IP gateway;
- sending a short message addressed to the visiting subscriber (201) to a Short Message Service Centre (SMSC) (10) of the visited network (100) from said server (18).

20. A method according to any of claims 13 to 19, **characterised in that** the short message text is selected based on the identity of the home mobile telephony network (HPLMN).

21. A method according to claim 20, **characterised in that** the short message text is selected based on the IMSI of the visiting subscriber.

22. A method according to claim 19, **characterised in that** the text is selected from a plurality of texts comprised in a database of the short message sending server (18) based on an indicator code included in the http message received from the SS7-IP gateway (16).

23. A method according to claim 19, **characterised in that** the http message includes at least one indicator code indicating a short message text and the mobile telephone number (MSISDN) of the subscriber (201) to whom the short message must be sent.

24. A method according to any of claims 13 to 23, **characterised in that** it comprises a first step comprising sending an initial control set-up message to the first node (11), comprising at least the following data: the telephone number dialled by the subscriber; the mobile telephone number (MSISDN) of the subscriber; and the IMSI of the subscriber.

25. A method according to claim 24, **characterised in that** the initial control set-up message is sent from an MSC (5) of the visited mobile telephony network (100) corresponding to the cell (2) in which the subscriber is located.

26. A method according to any of claims 13 to 25, **characterised in that** before sending a short message with a dialling error notification to the subscriber, it is checked that a predetermined minimum time has elapsed since a previous short message with a dialling error notification was sent to the same subscriber, and if said predetermined minimum time has not elapsed, the short message with a dialling error notification is not sent.

27. A method according to any of claims 13 to 26, **characterised in that** the error criteria include one or several criteria selected from the group comprising the following criteria:
- the number dialled begins with "+" followed by a sign different from a figure C, 1≤C≤9;
- the number dialled begins with "00" followed by a sign different from a figure C, 1≤C≤9;
- the number dialled is a 9-figure number beginning with a figure which is not 6, 7, 8 or 9;
- the number dialled begins with "+" or "00" followed by a country code followed by an escape code not applicable for international dialling to said country; and
- the number dialled is a number with fewer than 9 figures which is not a short code.

28. A method according to any of claims 13 to 27, **characterised in that** it is only carried out for visiting subscribers who are not provided with CAMEL service O-CSI flag.
